# EUROPÄISCHE PATENTANMELDUNG

(11) **EP 3 299 914 A1**
(43) Veröffentlichungstag der Anmeldung: **28.03.2018**
(21) Anmeldenummer: 16190678.9
(22) Anmeldetag: 26.09.2016
(51) Int. Cl.: G05B 19/05

(54) **VERFAHREN ZUM ERZEUGEN EINES KONTROLLFLUSSPLANES**

(71) Anmelder: Siemens Aktiengesellschaft, 80333 München (DE)
(72) Erfinder: Pohlan, Rudolf, 76337 Waldbronn (DE); Timm, Andreas, 76137 Karlsruhe (DE)

(57) **Zusammenfassung**

Die Erfindung betrifft ein Verfahren zum Erzeugen eines Kontrollflussplanes (4, 9) für ein Steuerprogramm eines Automatisierungsgerätes, wobei ein Anwender zur Erstellung des Steuerprogrammes mittels eines Engineering-Systems Bausteine (1, 2, 11 bis 14) aus einem verfügbaren Bausteinvorrat auswählt und verschaltet und wobei der Kontrollflussplan (4, 9) die Reihenfolge der Baustein-Verarbeitung durch das Automatisierungsgerät vorgibt, indem in dieser Reihenfolge den Bausteinen (1, 2, 11 bis 14) zugeordnete Bausteinbezeichner (1b, 2b, 11b bis 14b) im Kontrollflussplan (4, 9) hinterlegt werden. Es werden Maßnahmen vorgeschlagen, mittels welcher quasi zum Zeitpunkt des Verschaltens die Verarbeitungs-Reihenfolge der Bausteine festgelegt wird, wobei zunächst überprüft wird, ob die neue Verschaltung Totzeiten verursacht. Anschließend wird für den Fall, dass diese neue Verschaltung eine störende Totzeit verursachen würde, durch eine Änderung in der Verarbeitungs-Reihenfolge diese störende Totzeit präventiv eliminiert.

## Beschreibung

Die Erfindung betrifft ein Verfahren zum Erzeugen eines Kontrollflussplanes für ein Steuerprogramm eines Automatisierungsgerätes, wobei ein Anwender zur Erstellung des Steuerprogrammes mittels eines Engineering-Systems Bausteine aus einem verfügbaren Bausteinvorrat auswählt und verschaltet und wobei der Kontrollflussplan die Reihenfolge der Baustein-Verarbeitung durch das Automatisierungsgerät vorgibt, indem in dieser Reihenfolge den Bausteinen zugeordnete Bausteinbezeichner im Kontrollflussplan hinterlegt werden. Darüber hinaus betrifft die Erfindung ein Engineering-System gemäß dem Oberbegriff des Patentanspruchs 3.

Im Rahmen der Projektierung einer Automatisierungseinrichtung, insbesondere für eine Automatisierungseinrichtung zur Steuerung verfahrenstechnischer Anlagen, wird in der Regel ein bibliotheksbasierter Typ-Instanz-Ansatz für Automatisierungsfunktionen verwendet. Dazu werden vorgefertigte Komponenten bzw. Bausteine zum Automatisierungs- bzw. Steuerprogramm (Anwenderprogramm) verschaltet, welches auf einer Steuerung bzw. auf einem Automatisierungsgerät (speicherprogrammierbare Steuerung (SPS), Programmable Logic Controller (PLC)) der Automatisierungseinrichtung abläuft. Solche Komponenten sind beispielsweise so genannte CFCs ("Continuous Function Charts"), welche die Automatisierung einzelner Anlagenteile sowie Messstellen verwirklichen bzw. repräsentieren. Darüber hinaus werden so genannte SFCs ("Sequential Function Charts") verwendet, welche auf dem Prinzip "Zustand-Transition" basieren und welche die CFCs zu komplexen Automatisierungsabläufen "zusammenschalten".

Derartige CFCs und SFCs sind aus dem Siemens-Katalog "Prozessleitsystem SIMATIC PCS 7", Ausgabe 2014/15, Kapitel 4, bekannt. Mittels eines auf einem Engineering-System ablauffähigen grafischen Editors in Form eines "Continuous Function Chart (CFC)-Editors", erstellt ein Automatisierungstechniker aus vorgefertigten Bausteinen (Objekten) nach Maßgabe einer zu lösenden Automatisierungsaufgabe eine Automatisierungslösung bzw. ein Anwender- oder Steuerprogramm für ein Automatisierungsgerät. Dazu wählt der Anwender die Bausteine bzw. Objekte, z. B. einen Regler- oder Zähler-Baustein aus einem verfügbaren Bausteinvorrat aus, platziert die Bausteine z. B. per Drag&Drop in einem Funktionsplan (z. B. CFC-Plan) und verschaltet diese per Mausklick miteinander, wobei aufgrund der Platzierung der Bausteine automatisch eine Instanz des jeweiligen Bausteins erzeugt wird. Unter dem Begriff "verschalten" wird verstanden, dass z. B. für die Kommunikation zwischen den CFC-Bausteinen Werte von einem Ausgang eines Bausteins zu einem oder mehreren Eingängen eines oder mehrerer Bausteine übertragen werden. Ferner wird darunter verstanden, dass ein oder mehrere Eingänge eines oder mehrerer Bausteine mit Prozesseingängen eines Prozessabbilds zur Übertragung von Istwerten verschaltet und/oder dass ein oder mehrere Ausgänge eines oder mehrerer Bausteine mit Prozessausgängen des Prozessabbilds zur Übertragung von Sollwerten verschaltet sind. Nachdem der Anwender alle Funktionen im Funktionsplan erstellt hat, erzeugt das Engineering-System mittels des Automatisierungsgerätes lesbare CFC-Automatisierungsobjekte bzw. CFC-Funktionen, die in dieses Automatisierungsgerät geladen und dort im Rahmen der Steuerung eines technischen Prozesses bzw. zur Lösung der Automatisierungsaufgabe verarbeitet werden.

Die Verarbeitung der Automatisierungsobjekte durch das Automatisierungsgerät und somit die Verarbeitung der CFC-Bausteine erfolgt zyklisch, wobei gemäß eines zu projektierenden Kontrollflussplans die Reihenfolge der Verarbeitung dieser Bausteine festgelegt bzw. vorgegeben wird. Dabei kann es vorkommen, dass durch eine "ungeschickte" Festlegung dieser Reihenfolge während der Verarbeitung des Steuerprogramms bzw. während der Prozesssteuerung so genannte unerwünschte Totzeiten entstehen. Eine derartige Totzeit entsteht z. B. dann, falls während eines Verarbeitungszyklus ein Baustein zu verarbeiten ist, dessen aktueller Eingangswert (Eingangsvariable, Verschaltungssenke) erst in einem folgenden Verarbeitungszyklus von einem weiteren Baustein als Ausgangswert (Ausgangsvariable, Verschaltungsquelle) bereitgestellt werden kann. Dies bedeutet, dass dem einen Baustein ein Eingangswert aus einem vorangegangenen Verarbeitungszyklus aufgeschaltet wird, wodurch im Rahmen eines zu steuernden verfahrenstechnischen Prozesses ein Sollzustand erst zeitlich verzögert erreicht wird.

Der Erfindung liegt daher die Aufgabe zugrunde ein Verfahren der eingangs genannten Art anzugeben, mittels dessen unerwünschte Totzeiten vermieden werden. Darüber hinaus ist ein Engineering-System gemäß dem Oberbegriff des Anspruchs 3 zu schaffen, welche zur Durchführung des Verfahrens geeignet ist.

Diese Aufgabe wird im Hinblick auf das Verfahren durch die im kennzeichenenden Teil des Anspruchs 1 angegebenen, bezüglich des Engineering-Systems durch die im Anspruch 3 angegebenen Maßnahmen gelöst.

Vorteilhaft ist, dass quasi zum Zeitpunkt des Verschaltens die Verarbeitungs-Reihenfolge der beteiligten Bausteine festgelegt wird, wobei zunächst überprüft wird, ob die neue Verschaltung Totzeiten verursacht. Anschließend wird für den Fall, dass diese neue Verschaltung eine störende Totzeit verursachen würde, durch eine Änderung in der Verarbeitungs-Reihenfolge diese störende Totzeit präventiv eliminiert. Für den Fall dagegen, dass eine "nicht auflösbare Rückführung" bzw. gewünschte Totzeit erkannt wird, was bedeutet, dass der Anwender einen Ausgang eines ersten Bausteins mit einem Eingang eines zweiten Bausteins sowie einen Ausgang dieses zweiten Bausteins mit einem Eingang des ersten Bausteins verschaltet, wird im Kontrollflussplan der erste Baustein vor dem zweiten Baustein eingetragen.

In einer Ausgestaltung der Erfindung ist vorgesehen, dass für den Fall einer "nicht auflösbaren Rückführung" der Eingang des ersten Bausteins markiert wird, wodurch der Anwender auf die verursachte Totzeit visuell hingewiesen wird.

Die Erfindung ist insbesondere vorgesehen für die Programmierung von Automatisierungsgeräten bzw. von speicherprogrammierbaren Steuerungen mittels grafischen Editoren. Derartige Programme - z. B. CFC ("Continuous Function Chart"), SFC (Sequentiell Function Chart), LAD ("Ladder Diagram"), FBD ("Function Block Diagram") - basieren auf der Norm IEC 61131-3.

Anhand der Zeichnung, in der Ausführungsbeispiele der Erfindung veranschaulicht sind, werden im Folgenden die Erfindung, deren Ausgestaltungen sowie Vorteile näher erläutert.

Es zeigen in einer vereinfachten Form:

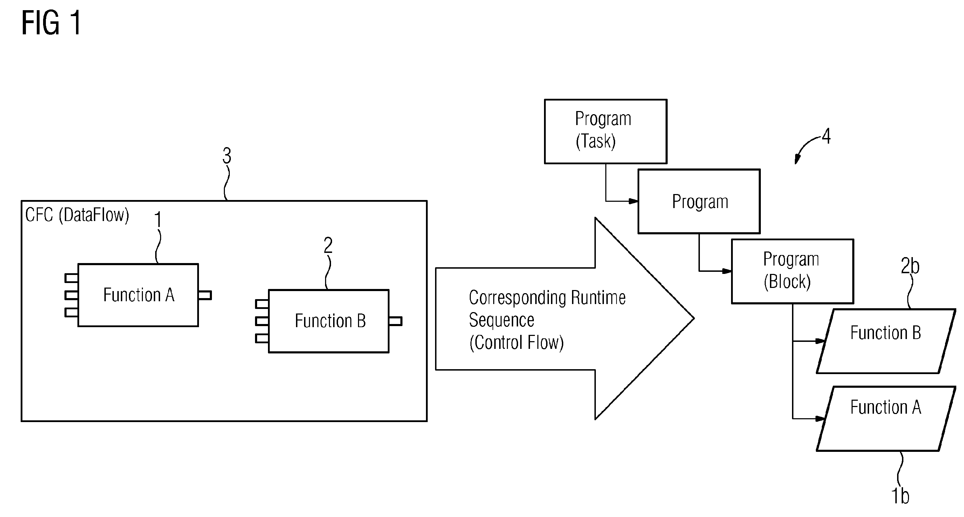

Figuren 1 bis 5 Bestandteile von CFC-Plänen mit Kontrollflussplänen.

Es wird angenommen, dass ein Anwender in einer an sich bekannten Weise mittels eines auf einem Engineering-System ablauffähigen grafischen Editors in Form eines "Continuous Function Chart (CFC)-Editors" nach Maßgabe einer zu lösenden Automatisierungsaufgabe ein Steuerprogramm für ein Automatisierungsgerät erstellt. Dazu wählt der Anwender Bausteine aus einem verfügbaren Bausteinvorrat aus und platziert die Bausteine z. B. per Drag&Drop in einem Funktionsplan (z. B. CFC-Plan). Im vorliegenden Beispiel sind zunächst ein erster Baustein 1 und anschließend ein zweiter Baustein 2 in einem Funktionsplan 3 positioniert (Figur 1), wobei mittels des Engineering-Systems in einem dazugehörigen Kontrollflussplan 4 automatisch ein Bausteinbezeichner 2b bzw. Kennung des zweiten Bausteins 2 vor einem Bausteinbezeichner 1a bzw. Kennung des ersten Bausteins 1 eingetragen wird. Die Eintragung des Bausteinbezeichners 2b vor den Bausteinbezeichner 1b erfolgt aufgrund dessen, dass der zweite Baustein 2 nach dem ersten Baustein ausgewählt wurde. Entsprechend der Reihenfolge der eingetragenen Bausteinbezeichner würde das Automatisierungsgerät während der Prozesssteuerung ("Runtime") die dazugehörigen ersten und zweiten Bausteine verarbeiten, falls diese kompiliert und in das Automatisierungsgerät geladen werden würden.

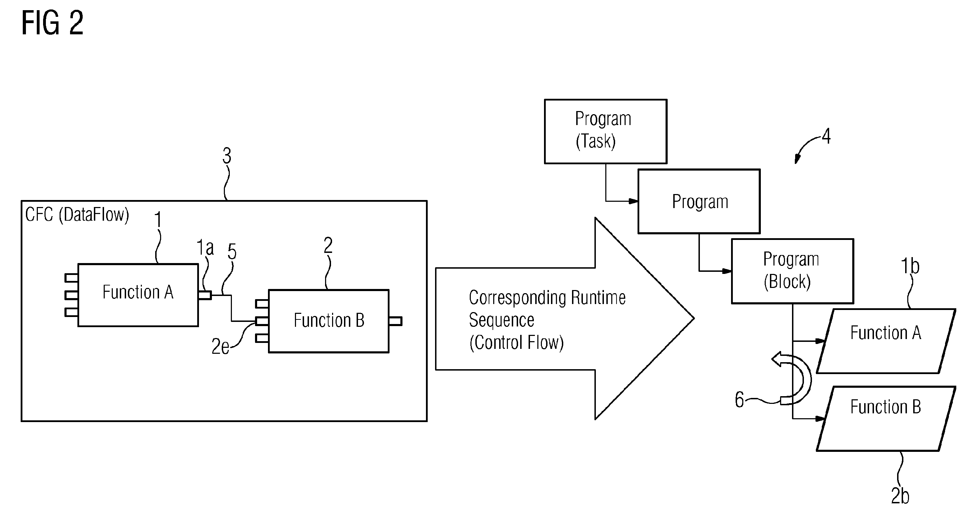

Es wird angenommen, dass der Anwender in einem nächsten Schritt (Figur 2) einen Ausgang 1a des ersten Bausteins 1 mit einem Eingang 2e des zweiten Bausteins 2 verschaltet (Verschaltungslinie 5). Der Ausgang 1a repräsentiert in diesem Fall eine Verschaltungsquelle und der Eingang 2e eine Verschaltungssenke, was bedeutet, dass dem zweiten Baustein 2 eine Ausgangsvariable des ersten Bausteins 1 als Eingangsvariable zuzuführen ist. Aufgrund dieser Verschaltung wird automatisch mittels des Engineering-Systems die Reihenfolge der Bausteinbezeichner 1b, 2b im Kontrollflussplan 4 geändert, indem im Kontrollflussplan 4 der Bausteinbezeichner 1b des ersten Bausteins 1 vor den Bausteinbezeichner 2b des zweiten Bausteins 2 eingetragen wird. Im Unterschied zum Kontrollflussplan 4 gemäß Figur 1 ist im Kontrollflussplan 4 gemäß Figur 2 die Reihenfolge der Bausteinbezeichner 1b, 2b vertauscht, was in der Zeichnung durch einen Pfeil 6 angedeutet ist. Würde die Reihenfolge im Kontrollflussplan 4 nicht geändert werden, würde im Rahmen der Prozesssteuerung das Automatisierungsgerät - nach vorangegangener Kompilierung und Downloaden des CFC-Plans in das Automatisierungsgerät - während eines Verarbeitungszyklus zunächst den zweiten Baustein 2b und anschließend den ersten Baustein 1 verarbeiten. Dies bedeutet, dass dem zweiten Baustein 2 als Eingangswert stets ein Ausgangswert des ersten Bausteins 1 aus einem vorangegangenen Verarbeitungszyklus aufgeschaltet wird, wodurch im Rahmen eines zu steuernden verfahrenstechnischen Prozesses ein Sollzustand erst zeitlich verzögert erreicht wird. Aufgrund der Änderung in der Reihenfolge im Kontrollflussplan 4 wird dagegen bewerkstelligt, dass dem zweiten Baustein 2 als Eingangswert stets ein Ausgangswert des ersten Bausteins 1 aus dem aktuellen Verarbeitungszyklus aufgeschaltet wird, wodurch Verzögerungen bzw. Totzeiten während der Prozesssteuerung vermieden werden.

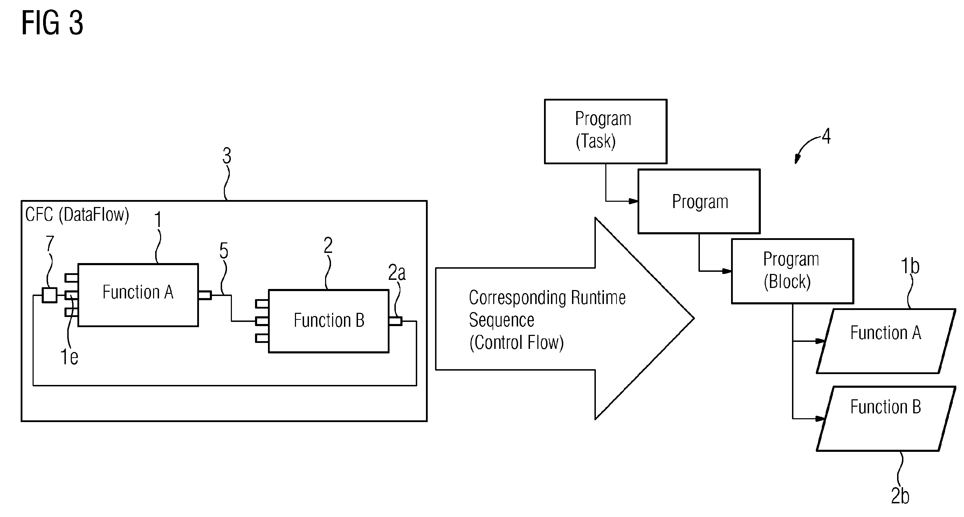

Es wird im Folgenden angenommen, dass der Anwender in einem weiteren Schritt (Figur 3) die Verschaltung der Bausteine 1, 2 weiter modifiziert, indem der Anwender einen Ausgang 2a des zweiten Bausteins 2 mit einem Eingang 1e des ersten Bausteins 1 verschaltet, was eine gewünschte und "nicht auflösbare Rückführung" repräsentiert. In diesem Fall wird im Kontrollflussplan 4 der Bausteinbezeichner 1b vor dem Bausteinbezeichner 2b eingetragen bzw. im vorliegenden Ausführungsbeispiel bleibt im Vergleich zur Ablaufsequenz bzw. Reihenfolge der Baustein-Verarbeitung gemäß Figur 2 die Ablaufsequenz bzw. Reihenfolge der Baustein-Verarbeitung unverändert. Die während eines Verarbeitungszyklus bereitgestellte Variable am Ausgang 2a des zweiten Bausteins 2 wird erst in einem auf diesen Verarbeitungszyklus folgenden Verarbeitungszyklus mittels des ersten Bausteins 1 verarbeitet, was eine Verzögerung bzw. Totzeit bedeutet. Der Eingang 1e des ersten Bausteins 1 wird mittels eines Symbols 7 markiert, welches den Anwender im CFC-Plan 3 auf die Verzögerung hinweist.

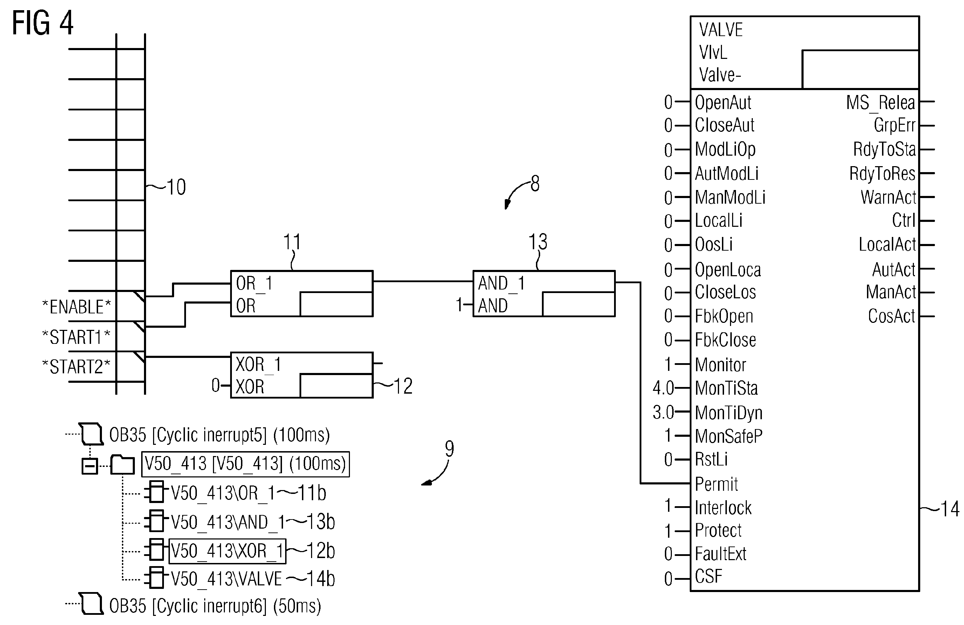

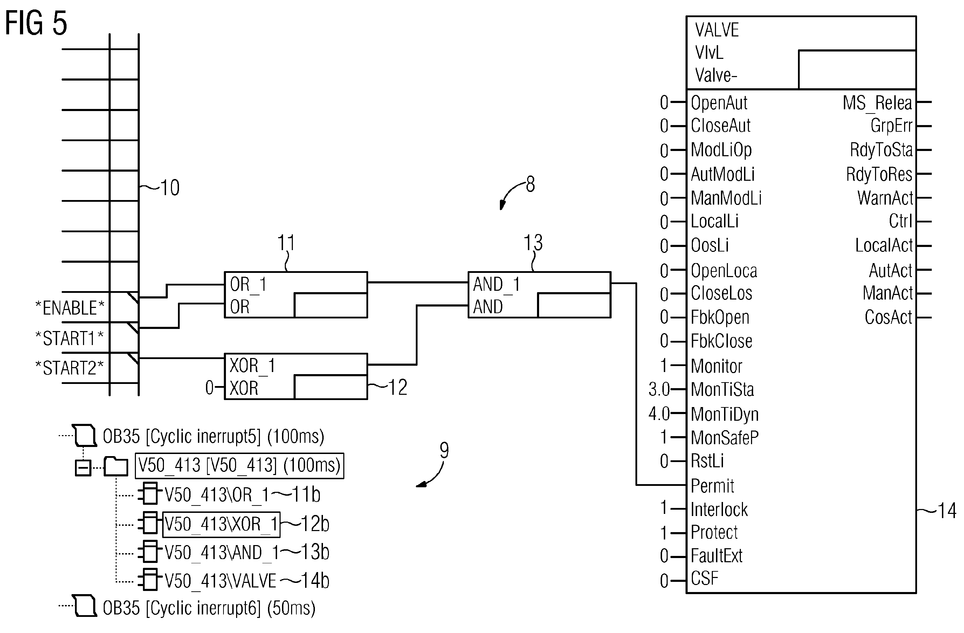

Im Folgenden wird auf die Figuren 4 und 5 verwiesen, in welchen ein weiteres Ausführungsbeispiel Erfindung dargestellt ist. Die Figuren zeigen Bestandteile von CFC-Plänen 8 mit dazugehörigen Kontrollflussplänen 9.

Ausgänge eines Prozessabbildes 10 verschaltete ein Anwender mit Eingängen von Bausteinen 11, 12, wobei gemäß Figur 4, ein Ausgang des Bausteins 11 mit einem Eingang eines weiteren Bausteins 13 verschaltet ist, dessen Ausgang mit einem Eingang eines Ventil-Bausteins 14 verbunden ist. Es wird angenommen, dass im Rahmen der CFC-Plan-Erstellung (Auswahl der Bausteine, Positionierung der Bausteine, Verschaltung der Bausteine) mittels des Engineering-Systems den Bausteinen 11, 12, 13, 14 zugeordnete Bausteinbezeichner 11b, 12b, 13b, 14b erzeugt und im Kontrollflussplan 9 in der Reihenfolge 11b, 13b, 12b, 14b eingetragen wurden (Figur 4). Für den Fall, dass der Anwender einen Ausgang des Bausteines 12 mit einem weiteren Eingang des Bausteins 13 verschaltet (Figur 5), ändert das Engineering-System automatisch die Reihenfolge der Bausteinbezeichner im Kontrollflussplan 9 in der Art, dass der Bausteinbezeichner 12b vor den Bausteinbezeichner 13b gesetzt wird. Diese Änderung bewirkt, dass nach einer Kompilierung und nach einem Laden des CFC-Plans das Automatisierungsgerät während der Prozesssteuerung die Bausteine in der Reihenfolge Baustein 11, Baustein 12, Baustein 13, Baustein 14 verarbeitet.

## Patentansprüche

1. Verfahren zum Erzeugen eines Kontrollflussplanes (4, 9) für ein Steuerprogramm eines Automatisierungsgerätes, wobei ein Anwender zur Erstellung des Steuerprogrammes mittels eines Engineering-Systems Bausteine (1, 2, 11 bis 14) aus einem verfügbaren Bausteinvorrat auswählt und verschaltet und wobei der Kontrollflussplan (4, 9) die Reihenfolge der Baustein-Verarbeitung durch das Automatisierungsgerät vorgibt, indem in dieser Reihenfolge den Bausteinen (1, 2, 11 bis 14) zugeordnete Bausteinbezeichner (1b, 2b, 11b bis 14b) im Kontrollflussplan (4, 9) hinterlegt werden, **dadurch gekennzeichnet, dass** beim Verschalten der Ein- und Ausgänge von mindestens zwei Bausteinen (1, 2, 11 bis 14) automatisch die Reihenfolge der Baustein-Verarbeitung überprüft wird, wobei
- für den Fall, dass a) ein Ausgang (1a) eines der Bausteine (1) mit einem Eingang (2e) des anderen Bausteins (2) verschaltet wird, im Kontrollflussplan (4) in der Reihenfolge der Baustein-Verarbeitung ein Bausteinbezeichner (1b) des einen Bausteins (1) vor den Bausteinbezeichner (2b) des anderen Bausteins (2) automatisch eingetragen wird,
- für den Fall, dass b) ein Ausgang (1a) des einen Bausteins (1) mit einem Eingang (2e) des anderen Bausteins (2) verschaltet wird und ein Ausgang (2a) des anderen Bausteins (2) mit einem Eingang (1e) des einen Bausteins (1) verschaltet wird, im Kontrollflussplan (4) in der Reihenfolge der Baustein-Verarbeitung der Bausteinbezeichner (1b) des einen Bausteins (1) vor den Bausteinbezeichner (2b) des anderen Bausteins (2) automatisch eingetragen wird.

2. Verfahren nach Anspruch 1, **dadurch gekennzeichnet, dass** für den Fall b) der Eingang (1e) des einen Bausteins (1) automatisch markiert wird.

3. Engineering-Systems, welches zum Erzeugen eines Kontrollflussplanes für ein Steuerprogramm eines Automatisierungsgerätes ausgebildet ist, wobei ein Anwender zur Erstellung des Steuerprogrammes mittels des Engineering-Systems Bausteine (1, 2, 11 bis 14) aus einem verfügbaren Bausteinvorrat auswählt und verschaltet und wobei der Kontrollflussplan (4, 9) die Reihenfolge der Baustein-Verarbeitung durch das Automatisierungsgerät vorgibt, indem in dieser Reihenfolge den Bausteinen (1, 2, 11 bis 14) zugeordnete Bausteinbezeichner (1b, 2b, 11b bis 14b) im Kontrollflussplan (4, 9) hinterlegt werden, **dadurch gekennzeichnet, dass** das Engineering-System dazu ausgebildet ist, beim Verschalten der Ein- und Ausgänge von mindestens zwei Bausteinen (1, 2, 11 bis 14) die Reihenfolge der Baustein-Verarbeitung automatisch zu überprüfen, wobei das Engineering-System ferner dazu ausgebildet ist,
- für den Fall, dass a) ein Ausgang (1a) eines der Bausteine (1) mit einem Eingang (2e) des anderen Bausteins (2) verschaltet ist, im Kontrollflussplan (4) in der Reihenfolge der Baustein-Verarbeitung ein Bausteinbezeichner (1b) des einen Bausteins (1) vor den Bausteinbezeichner (2b) des anderen Bausteins (2) automatisch einzutragen,
- für den Fall, dass b) ein Ausgang (1a) des einen Bausteins (1) mit einem Eingang (2e) des anderen Bausteins (2) verschaltet ist und ein Ausgang (2a) des anderen Bausteins (2) mit einem Eingang (1e) des einen Bausteins (1) verschaltet ist, im Kontrollflussplan (4) in der Reihenfolge der Baustein-Verarbeitung der Bausteinbezeichner (1b) des einen Bausteins (1) vor den Bausteinbezeichner (2b) des anderen Bausteins (2) automatisch einzutragen.

4. Engineering-System nach Anspruch 3, **dadurch gekennzeichnet, dass** das Engineering-System ferner dazu ausgebildet ist, für den Fall b) den Eingang (1e) des einen Bausteins (1) automatisch zu markieren.
